(19) Europäisches Patentamt
European Patent Office
Office européen des brevets

(11) **EP 4 239 011 A1**

(12) **EUROPEAN PATENT APPLICATION**
published in accordance with Art. 153(4) EPC

(43) Date of publication:
**06.09.2023 Bulletin 2023/36**

(21) Application number: **21886105.2**

(22) Date of filing: **25.10.2021**

(51) International Patent Classification (IPC):
***C08G 69/26*** (2006.01)     ***C08L 77/06*** (2006.01)

(52) Cooperative Patent Classification (CPC):
**C08G 69/26; C08L 77/06**

(86) International application number:
**PCT/JP2021/039200**

(87) International publication number:
**WO 2022/091987 (05.05.2022 Gazette 2022/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.10.2020   JP 2020179854**

(71) Applicant: **Kuraray Co., Ltd.
Kurashiki-shi, Okayama 710-0801 (JP)**

(72) Inventors:
- **NANYA, Atsushi
  Tsukuba-shi, Ibaraki 305-0841 (JP)**
- **TAKEDA, Hideaki
  Tsukuba-shi, Ibaraki 305-0841 (JP)**

(74) Representative: **Müller-Boré & Partner
Patentanwälte PartG mbB
Friedenheimer Brücke 21
80639 München (DE)**

(54) **POLYAMIDE**

(57)     Provided is a polyamide comprising a diamine unit and a dicarboxylic acid unit, wherein the diamine unit comprises 0.1 mol% or more and less than 36 mol% of a diamine unit (X), and the diamine unit (X) is a diamine unit derived from an aliphatic diamine having 6 to 10 carbon atoms, the aliphatic diamine having an alkyl group having 2 or 3 carbon atoms bonded to a carbon atom at the 2-position when a carbon atom to which any one of amino groups is bonded is defined as the 1-position.

**EP 4 239 011 A1**

**Description**

Technical Field

The present invention relates to a polyamide comprising a specific diamine unit having a branched chain and a dicarboxylic acid unit.

Background Art

Crystalline polyamides represented by nylon 6, nylon 66, and the like are widely used for industrial parts because of their excellent heat resistance, mechanical properties, moldability, and the like. For example, in automotive applications, resinification of metal parts has been promoted from the viewpoint of weight reduction and design flexibility, and crystalline polyamides excellent in the above properties are often used. However, the performance required for plastic materials from the viewpoint of improving fuel efficiency and complying with environmental regulations has become severe, and materials with more excellent performance from the viewpoint of heat resistance and the like are required.

In addition, from the viewpoint of reducing the production cost of parts, there is a demand for a material having a short time required for the material to be cooled and solidified from a molten state, that is, a material having a high crystallization rate. Since the crystallization rate is high, the time required for molding one part can be shortened, and the production efficiency can be improved.

For example, PTL 1 discloses that a polyamide simultaneously satisfying fluidity, toughness, rigidity, and the like can be obtained by containing at least 50 mol% of a diamine unit having a branched structure in the main chain of the polyamide. Whereas PTL 2 discloses a method for producing a polyamide composition containing a diamine unit having a methyl or ethyl branch.

Citation List

Patent Literature

PTL 1: JP 2011-080055 A
PTL 2: JP 2017-517594 A

Summary of Invention

Technical Problem

In PTLs 1 and 2, a methyl group, an ethyl group, an n-propyl group, and the like are described as substituents branched from a main chain of a constituent unit derived from a diamine forming a polyamide. However, only a diamine having a methyl group as a branched chain is specifically exemplified. In any of the documents, there is no specific disclosure including a branched diamine having a substituent having a larger number of carbon atoms than that of a methyl group as a branched chain, and the effect of having a branched chain having 2 or more carbon atoms is not clear.

As described above, while a material having a high crystallization rate is required, physical properties such as heat resistance, which a crystalline polyamide originally has, are also required, and both of these physical properties are required.

Therefore, the present invention provides a polyamide excellent in crystallization rate and heat resistance.

Solution to Problem

As a result of intensive studies to solve the above problems, the present inventors have conceived the following present invention and found that the problems can be solved.

In other words, the present invention is as follows.

A polyamide comprising a diamine unit and a dicarboxylic acid unit, wherein the diamine unit comprises 0.1 mol% or more and less than 36 mol% of a diamine unit (X), and the diamine unit (X) is a diamine unit derived from an aliphatic diamine having 6 to 10 carbon atoms, the aliphatic diamine having an alkyl group having 2 or 3 carbon atoms bonded to a carbon atom at the 2-position when a carbon atom to which any one of amino groups is bonded is defined as the 1-position.

Advantageous Effects of Invention

According to the present invention, a polyamide excellent in crystallization rate and heat resistance can be provided.

Description of Embodiments

Hereinafter, an example of an embodiment of the present invention (hereinafter, may be referred to as "the present embodiment") will be described. However, the embodiments described below are examples for embodying the technical idea of the present invention, and the present invention is not limited to the following description.

In addition, in the description herein, preferred embodiments are shown, but a combination of two or more of individual preferred embodiments is also a preferred embodiment. Regarding the matters indicated by the numerical ranges, in a case where there are several numerical ranges, it is possible to selectively combine the lower limit value and the upper limit value thereof to obtain a preferred embodiment.

In the description herein, when there is a description of a numerical range of "XX to YY", it means "XX or more and YY or less".

Further, in the description herein, "- unit" (wherein "-" represents a monomer) means "constituent unit derived from -", for example, "dicarboxylic acid unit" means "constituent unit derived from dicarboxylic acid", and "diamine unit" means "constituent unit derived from diamine".

[Polyamide]

The polyamide of the present embodiment comprises a diamine unit and a dicarboxylic acid unit.

In the present embodiment, the diamine unit is characterized by comprising a specific amount of a diamine unit (X) derived from an aliphatic diamine having 6 to 10 carbon atoms and having an alkyl group having 2 or 3 carbon atoms bonded to a carbon atom at the 2-position when a carbon atom to which any one of amino groups is bonded is defined as the 1-position.

In general, when a component having a large excluded volume such as a branched chain is contained in a polymer skeleton, molecular chains are less likely to be regularly arranged, and thus the crystallization rate of the polymer tends to be low. However, in the present embodiment, by comprising a specific amount of a diamine component having an alkyl group having 2 or 3 carbon atoms, such as an ethyl group or a propyl group, as a branched chain, the crystallization rate was unexpectedly increased.

In addition, in general, when a polyamide has a bulky substituent such as a branched chain, the polyamide is less likely to have a crystal structure, and the melting point tends to decrease. However, even if the polyamide of the present embodiment has a relatively bulky substituent having 2 or 3 carbon atoms, such as an ethyl group or a propyl group, as a branched chain, the decrease in melting point is small, and excellent heat resistance can be exhibited.

Further, a glass transition temperature is a property which is higher as the molecular mobility of the amorphous portion is lower. Therefore, when a component having high molecular mobility such as a branched chain is contained, the glass transition temperature generally tends to become lower. However, unexpectedly, the polyamide of the present embodiment has little decrease in the glass transition temperature, and can exhibit excellent heat resistance.

In the present embodiment, as one of the reasons why the above-described effects are obtained, it is considered that the number of carbon atoms in the branched chain, the position of the branched chain, and the amount of the branched chain included in the diamine unit contained in the polyamide may affect the improvement of the crystallization rate while maintaining excellent heat resistance. However, the detailed reason is not clear.

(Diamine Unit)

<Diamine Unit (X)>

The diamine unit comprises a diamine unit (X) derived from an aliphatic diamine having 6 to 10 carbon atoms, the aliphatic diamine having an alkyl group having 2 or 3 carbon atoms bonded to a carbon atom at the 2-position when a carbon atom to which any one of amino groups is bonded is defined as the 1-position.

When assuming a linear aliphatic chain having carbon atoms of which carbon atoms at both ends are respectively bonded to two amino groups, the diamine unit (X) is derived from the aliphatic diamine having a structure in which one of the hydrogen atoms on the carbon atom at the 2-position adjacent to the carbon atom at the 1-position to which any one of the two amino groups is bonded is substituted with an alkyl group having 2 or 3 carbon atoms.

The number of carbon atoms of the branched aliphatic diamine unit forming the diamine unit (X) is preferably 8 to 10, and more preferably 9. When the number of carbon atoms is within the above range, the polymerization reaction between dicarboxylic acid and diamine proceeds well, and the physical properties of the polyamide are more easily improved.

In the branched aliphatic diamine unit constituting the diamine unit (X), the alkyl group having 2 or 3 carbon atoms is preferably at least one selected from the group consisting of an ethyl group, a propyl group, and an isopropyl group, and more preferably at least one selected from the group consisting of an ethyl group and a propyl group. When the number of carbon atoms of the alkyl group is 1 or is 4 or more, there is a possibility that the crystallization rate is not improved and the heat resistance is reduced.

The branched aliphatic diamine forming the diamine unit (X) may have a branched chain such as a methyl group (referred to as "other branched chain") at a carbon other than the 2-position as long as the effects of the present invention are not impaired. The number of other branched chains is preferably one or less, and it is more preferable that the diamine unit (X) does not comprise other branched chains.

Examples of the diamine unit (X) include constituent units derived from 2-ethyl- 1,4-butanediamine, 2-ethyl-1,5-pentanediamine, 2-ethyl-1,6-hexanediamine, 2-ethyl-1,7-heptanediamine, 2-ethyl-1,8-octanediamine, 2-propyl-1,5-pentanediamine, 2-propyl-1,6-hexanediamine, 2-propyl-1,7-heptanediamine, and 2,4-diethyl-1,6-hexanediamine. These constituent units may be included alone or two or more kinds thereof may be included.

In particular, from the viewpoint that a more excellent improvement in crystallization rate can be expected, it is preferable that the diamine unit (X) comprises a diamine unit derived from at least one selected from the group consisting of 2-ethyl-1,7-heptanediamine and 2-propyl-1,6-hexanediamine.

The diamine unit (X) is contained in an amount of 0.1 mol or more and less than 36 mol% in the diamine unit. When the diamine unit (X) is less than 0.1 mol%, it is difficult to improve the crystallization rate. When the diamine unit (X) is 36 mol% or more, there is a possibility that the heat resistance is excessively lowered.

From the viewpoint of obtaining a polyamide having a more excellent balance between heat resistance and crystallization rate, the content of the diamine unit (X) in the diamine unit is preferably 0.5 mol% or more, more preferably 1 mol% or more, still more preferably 3 mol% or more, and even more preferably 5 mol% or more. Whereas, from the above viewpoint, the content of the diamine unit (X) in the diamine unit is preferably 35 mol% or less, more preferably 30 mol% or less, still more preferably 25 mol% or less, even more preferably 20 mol% or less, even more preferably 18 mol% or less, even more preferably 15 mol% or less, and even more preferably 10 mol% or less.

In addition, as one preferred embodiment, when the diamine unit (X) comprises a constituent unit derived from at least one diamine selected from the group consisting of 2-ethyl-1,7-heptanediamine and 2-propyl-1,6-hexanediamine, an example of the content of each constituent unit is as follows.

The content of the constituent unit derived from 2-ethyl-1,7-heptanediamine in the diamine unit is preferably 0.5 mol% or more, and more preferably 2 mol% or more. Whereas, the content is preferably 20 mol% or less, preferably 16 mol% or less, more preferably 10 mol% or less, and still more preferably 5 mol% or less.

The content of the constituent unit derived from 2-propyl-1,6-hexanediamine in the diamine unit is preferably 0.1 mol% or more, and more preferably 0.5 mol% or more. Whereas, the content is preferably 5 mol% or less, and more preferably 2 mol% or less.

<Other Diamine Unit>

The polyamide of the present embodiment comprises, as a diamine unit, a diamine unit other than the diamine unit (X) (hereinafter, also referred to as "other diamine unit").

The other diamine unit is a constituent unit derived from a diamine having preferably 6 to 10 carbon atoms, more preferably 8 to 10 carbon atoms, and still more preferably 9 carbon atoms, from the viewpoint that the polymerization reaction between dicarboxylic acid and diamine proceeds well.

Examples of the other diamine unit include a constituent unit derived from at least one diamine selected from the group consisting of a linear aliphatic diamine, a branched aliphatic diamine other than the aliphatic diamine constituting the diamine unit (X), an alicyclic diamine, and an aromatic diamine.

Examples of the linear aliphatic diamine include ethylenediamine, 1,3-propanediamine, 1,4-butanediamine, 1,5-pentanediamine, 1,6-hexanediamine, 1,7-heptanediamine, 1,8-octanediamine, 1,9-nonandiamine, 1,10-decanediamine, 1,11-undecanediamine, 1,12-dodecanediamine, 1,13-tridecanediamine, 1,14-tetradecandiamine, 1,15-pentadecanediamine, 1,16-hexadecandiamine, 1,17-heptadecanediamine, and 1,18-octadecandiamine.

Examples of the branched aliphatic diamine include 1, 2-propanediamine, 1-butyl-1,2-ethanediamine, 1,1-dimethyl-1,4-butanediamine, 1-ethyl-1,4-butanediamine, 1,2-dimethyl-1,4-butanediamine, 1,3-dimethyl-1,4-butanediamine, 1,4-dimethyl-1,4-butanediamine, 2-methyl-1,3-propanediamine, 2-methyl-1,4-butanediamine, 2,3-dimethyl-1,4-butanediamine, 2-methyl-1,5-pentanediamine, 3-methyl-1,5-pentanediamine, 2-butyl-2-ethyl-1,5-pentanediamine, 2,5-dimethyl-1,6-hexanediamine, 2,4-dimethyl-1,6-hexanediamine, 3,3-dimethyl-1,6-hexanediamine, 2,2-dimethyl-1,6-hexanediamine, 2,2,4-trimethyl-1,6-hexanediamine, 2,4,4-trimethyl-1,6-hexanediamine, 2-methyl-1,8-octanediamine, 3-methyl-1,8-octanediamine, 1,3-dimethyl-1,8-octanediamine, 1,4-dimethyl-1,8-octanediamine, 2,4-dimethyl-1,8-octanediamine, 3,4-dimethyl-1,8-octanediamine, 4,5-dimethyl-1,8-octanediamine, 2,2-dimethyl-1,8-octanediamine, 3,3-dimethyl-1,8-octanediamine, 4,4-dimethyl-1,8-octanediamine, 2-methyl-1,9-nonanediamine, and 5-methyl-1,9-nonanediamine.

Examples of the alicyclic diamine include cyclohexanediamine, methylcyclohexanediamine, norbornanedimethylamine, tricyclodecanedimethyldiamine, bis(4-amino-3-ethylcyclohexyl)methane, and bis(4-amino-3-ethyl-5-methylcyclohexyl)methane.

Examples of the aromatic diamine include p-phenylenediamine, m-phenylenediamine, p-xylylenediamine, m-xylylenediamine, 4,4'-diaminodiphenyl methane, 4,4'-diaminodiphenyl sulfone, 4,4'-diaminodiphenyl ether, and 4,4'-methylene-bis-2,6-diethylaniline.

The constituent unit derived from the diamine may be only one kind, or may be two or more kinds.

Among the above-mentioned other diamine units, a constituent unit derived from at least one diamine selected from the group consisting of: a linear aliphatic diamine; and a branched aliphatic diamine in which a branched chain is a methyl group is more preferable. In the total amount of the other diamine units, the content of the constituent unit derived from at least one diamine selected from the group consisting of: a linear aliphatic diamine; and a branched aliphatic diamine in which a branched chain is a methyl group may be preferably 80 mol% or more, more preferably 90 mol% or more, still more preferably 95 mol% or more, for example, 100 mol%. From the viewpoint of easily exhibiting the effects of the present invention more remarkably, the other diamine unit is more preferably a constituent unit derived from at least one diamine selected from the group consisting of 1,6-hexanediamine, 1,9-nonanediamine, 1,10-decanediamine, 2-methyl-1,5-pentanediamine, and 2-methyl-1,8-octanediamine.

(Dicarboxylic Acid Unit)

As the dicarboxylic acid unit, an arbitrary dicarboxylic acid unit can be included.

The dicarboxylic acid unit can include, for example, a constituent unit derived from at least one dicarboxylic acid selected from the group consisting of an aliphatic dicarboxylic acid, an aromatic dicarboxylic acid, and an alicyclic dicarboxylic acid.

Examples of the aliphatic dicarboxylic acid include oxalic acid, malonic acid, succinic acid, glutaric acid, adipic acid, pimelic acid, suberic acid, azelaic acid, sebacic acid, undecanedicarboxylic acid, dodecanedicarboxylic acid, dimethylmalonic acid, 2,2-diethylsuccinic acid, 2,2-dimethylglutaric acid, 2-methyladipic acid, and trimethyladipic acid.

Examples of the aromatic dicarboxylic acid include terephthalic acid, isophthalic acid, diphenic acid, 4,4'-biphenyldicarboxylic acid, diphenylmethane-4,4'-dicarboxylic acid, diphenylsulphone-4,4'-dicarboxylic acid, 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, 2,7-naphthalenedicarboxylic acid, 2,3-furandicarboxylic acid, 2,4-furandicarboxylic acid, 2,5-furandicarboxylic acid, and 3,4-furandicarboxylic acid.

Examples of the alicyclic dicarboxylic acid include 1,3-cyclopentanedicarboxylic acid, 1,3-cyclohexanedicarboxylic acid, 1,4-cyclohexanedicarboxylic acid, cycloheptanedicarboxylic acid, cyclooctanedicarboxylic acid, and cyclodecanedicarboxylic acid.

The constituent unit derived from the dicarboxylic acid may be included alone or two or more kinds thereof may be included.

From the viewpoint of easily exhibiting the effects of the present invention more remarkably, the dicarboxylic acid unit preferably includes a constituent unit derived from at least one dicarboxylic acid selected from the group consisting of aromatic dicarboxylic acids and alicyclic dicarboxylic acids, and more preferably includes a constituent unit derived from at least one dicarboxylic acid selected from the group consisting of terephthalic acid, cyclohexanedicarboxylic acid, and naphthalenedicarboxylic acid.

The molar ratio of the diamine unit to the dicarboxylic acid unit [(diamine unit)/(dicarboxylic acid unit)] in the polyamide is preferably 45/55 to 55/45. When the molar ratio of the diamine unit to the dicarboxylic acid unit is within the above range, the polymerization reaction proceeds well, and a polyamide excellent in desired physical properties is easily obtained.

The molar ratio of the diamine unit to the dicarboxylic acid unit can be adjusted in accordance with the blending ratio (molar ratio) of the raw material diamine and the raw material dicarboxylic acid.

The total proportion of the diamine unit and the dicarboxylic acid unit in the polyamide (the proportion of the total number of moles of the dicarboxylic acid unit and the diamine unit to the number of moles of all the constituent units constituting the polyamide) is preferably 70 mol% or more, more preferably 80 mol% or more, still more preferably 90 mol% or more, even more preferably 95 mol% or more, and further may be 100 mol%. When the total proportion of the diamine unit and the dicarboxylic acid unit is within the above range, a polyamide having more excellent desired physical properties can be obtained.

(Aminocarboxylic Acid Unit)

The polyamide may further comprise an aminocarboxylic acid unit in addition to the diamine unit and the dicarboxylic acid unit.

Examples of the aminocarboxylic acid unit include constituent units derived from lactams such as caprolactam and lauryllactam; and aminocarboxylic acids such as 11-aminoundecanoic acid and 12-aminododecanoic acid. The content of the aminocarboxylic acid unit in the polyamide is preferably 40 mol% or less, and more preferably 20 mol% or less with respect to 100 mol% of the total of the diamine unit and the dicarboxylic acid unit constituting the polyamide.

(Polyvalent Carboxylic Acid Unit)

The polyamide may comprise a constituent unit derived from a polyvalent carboxylic acid having a valence of 3 or more, such as trimellitic acid, trimesic acid, or pyromellitic acid, within a range in which melt molding is possible, as long as the effects of the present invention are not impaired.

(Terminal Blocking Agent Unit)

The polyamide may comprise a constituent unit derived from a terminal blocking agent (terminal blocking agent unit).

The amount of the terminal blocking agent unit is preferably 1.0 mol% or more, more preferably 2.0 mol% or more, and is preferably 10 mol% or less, more preferably 5.0 mol% or less, with respect to 100 mol% of the diamine unit. When the content of the terminal blocking agent unit is within the above range, a polyamide excellent in desired physical properties is easily obtained. The content of the terminal blocking agent unit can be made to be within the above desired range by appropriately adjusting the amount of the terminal blocking agent at the time of charging the polymerization raw materials. In consideration of volatilization of the monomer component during polymerization, it is desirable to finely adjust the amount of the terminal blocking agent to be charged so that a desired amount of the terminal blocking agent unit is introduced into the obtained polyamide.

Examples of the method for obtaining the content of the terminal blocking agent unit in the polyamide include, as described in JP H07-228690 A, a method in which a solution viscosity is measured, the total amount of terminal groups is calculated from the relationship between the viscosity and the number-average molecular weight, and the amounts of amino groups and carboxy groups determined by titration are subtracted therefrom, and a method in which $^1$H-NMR is used to obtain the content based on the integrated values of signals corresponding to the diamine unit and the terminal blocking agent unit, respectively, the latter being preferred.

As the terminal blocking agent, a monofunctional compound having reactivity with a terminal amino group or a terminal carboxy group can be used. Specific examples thereof include monocarboxylic acids, acid anhydrides, monoisocyanates, monoacid halides, monoesters, monoalcohols, and monoamines. From the viewpoint of reactivity and the viewpoint of stability of the blocked terminal, a monocarboxylic acid is preferable as the terminal blocking agent for the terminal amino group, and a monoamine is preferable as the terminal blocking agent for the terminal carboxy group. From the viewpoint of ease of handling and the like, a monocarboxylic acid is more preferable as the terminal blocking agent.

The monocarboxylic acid used as the terminal blocking agent is not particularly limited as long as it has reactivity with an amino group, and examples thereof include aliphatic monocarboxylic acids such as acetic acid, propionic acid, butyric acid, valeric acid, caproic acid, caprylic acid, lauric acid, tridecanoic acid, myristic acid, palmitic acid, stearic acid, pivalic acid, and isobutyric acid; alicyclic monocarboxylic acids such as cyclopentanecarboxylic acid and cyclohexanecarboxylic acid; aromatic monocarboxylic acids such as benzoic acid, toluic acid, α-naphthalenecarboxylic acid, β-naphthalenecarboxylic acid, methylnaphthalenecarboxylic acid, and phenylacetic acid; and arbitrary mixtures thereof. Among these, at least one selected from the group consisting of acetic acid, propionic acid, butyric acid, valeric acid, caproic acid, caprylic acid, lauric acid, tridecanoic acid, myristic acid, palmitic acid, stearic acid, and benzoic acid is preferable from the viewpoint of reactivity, stability of the blocked terminal, price, and the like.

The monoamine used as the terminal blocking agent is not particularly limited as long as it has reactivity with a carboxy group, and examples thereof include aliphatic monoamines such as methylamine, ethylamine, propylamine, butylamine, hexylamine, octylamine, decylamine, stearylamine, dimethylamine, diethylamine, dipropylamine, and dibutylamine; alicyclic monoamines such as cyclohexylamine and dicyclohexylamine; aromatic monoamines such as aniline, toluidine, diphenylamine, and naphthylamine; and arbitrary mixtures thereof. Among these, at least one selected from the group consisting of butylamine, hexylamine, octylamine, decylamine, stearylamine, cyclohexylamine, and aniline is preferable from the viewpoint of reactivity, the viewpoint of a high boiling point, the viewpoint of stability of the blocked terminal, price, and the like.

(Physical Properties of Polyamide)

The polyamide preferably has a solution viscosity of 0.5 dL/g or more, and more preferably 0.7 dL/g or more. Whereas the polyamide preferably has a solution viscosity of 2.0 dL/g or less, and more preferably 1.5 dL/g or less. When the solution viscosity is within the above range, it is possible to obtain a polyamide having more excellent desired physical properties.

The solution viscosity of the polyamide can be obtained by measuring the flow-down time of a solution of concentrated sulfuric acid as the solvent having a concentration of 0.2 g/dL and a temperature of 30°C, and more specifically, can be obtained by the method described in Examples.

The polyamide preferably has a melting point of 250°C or higher, and more preferably 280°C or higher. When the melting point is within the above range, a polyamide having excellent heat resistance can be obtained. The upper limit of the melting point of the polyamide is not particularly limited, but is preferably 330°C or lower in consideration of moldability and the like.

The melting point of the polyamide can be obtained as a peak temperature of an endothermal peak that appears when the temperature is raised at a rate of 10°C/min using a differential scanning calorimetry (DSC) analyzer, and more specifically, can be obtained by the method described in the Examples.

The polyamide preferably has a glass transition temperature of 110°C or higher, and more preferably 120°C or higher. When the glass transition temperature is within the above range, a polyamide having excellent heat resistance can be obtained. The upper limit of the glass transition temperature of the polyamide is not particularly limited, but is preferably 180°C or lower, more preferably 160°C or more, and may be 150°C or lower, from the viewpoint of handleability and the like.

The glass transition temperature of the polyamide can be obtained as a temperature at an inflection point appearing when the temperature is raised at a rate of 20°C/min using a differential scanning calorimetry (DSC) analyzer, and more specifically, can be obtained by the method described in the Examples.

The polyamide preferably has a crystallization rate of $0.02°C^{-1}$ or more, and more preferably $0.04°C^{-1}$ or more. When the crystallization rate is within the above range, a highly productive polyamide can be obtained.

The crystallization rate can be obtained by the following formula (Formula 1).

$$\text{Crystallization rate } (°C^{-1}) = 1/(\text{melting point } (°C) - \text{crystallization temperature } (°C)) \quad (\text{Formula 1})$$

(Method for Producing Polyamide)

The polyamide can be produced by any method known as a method for producing a polyamide. For example, the polyamide can be produced by a method such as a melt polymerization method, a solid phase polymerization method, or a melt extrusion polymerization method using a dicarboxylic acid and a diamine as raw materials. Among these, a solid phase polymerization method is preferable from the viewpoint that thermal deterioration during polymerization can be more favorably suppressed.

The polyamide can be produced, for example, by first adding a diamine, a dicarboxylic acid, and optionally a catalyst and a terminal blocking agent all at once to produce a nylon salt, then heating and polymerizing the nylon salt at a temperature of 200 to 250°C to form a prepolymer, and further solid phase polymerizing the prepolymer or polymerizing the prepolymer using a melt extruder. When the final stage of the polymerization is carried out by solid phase polymerization, the polymerization is preferably carried out under reduced pressure or an inert gas stream, and when the polymerization temperature is within the range of 200 to 280°C, the polymerization rate is high, the producibility is excellent, and coloring and gelling can be effectively suppressed. When the final stage of the polymerization is carried out using a melt extruder, the polymerization temperature is preferably 370°C or lower, and when the polymerization is carried out under such conditions, there is almost no decomposition, and a polyamide with little deterioration is obtained.

Examples of the catalyst that can be used in producing the polyamide of the present embodiment include phosphoric acid, phosphorous acid, hypophosphorous acid, and salts or esters thereof. Examples of the salts or esters include salts of phosphoric acid, phosphorous acid, or hypophosphorous acid with metals such as potassium, sodium, magnesium, vanadium, calcium, zinc, cobalt, manganese, tin, tungsten, germanium, titanium, and antimony; ammonium salts of phosphoric acid, phosphorous acid, or hypophosphorous acid; and ethyl esters, isopropyl esters, butyl esters, hexyl esters, isodecyl esters, octadecyl esters, decyl esters, stearyl esters, and phenyl esters of phosphoric acid, phosphorous acid, or hypophosphorous acid.

The amount of the catalyst used is preferably 0.01% by mass or more, more preferably 0.05% by mass or more, and is preferably 1.0% by mass or less, more preferably 0.5% by mass or less, with respect to 100% by mass of the total mass of the raw materials. When the amount of the catalyst used is at least the above lower limit, the polymerization proceeds favorably. When the amount of the catalyst used is the upper limit or less, impurities derived from the catalyst are less likely to be generated, and for example, when a polyamide or a polyamide composition comprising the polyamide is formed into a film, defects due to the impurities can be prevented.

[Polyamide Composition]

In one embodiment, a polyamide composition comprising the above polyamide can be provided.
The polyamide composition is produced by adding a component other than the polyamide to the polyamide. Examples of the component include additives such as an inorganic filler, a heat stabilizer, a light stabilizer, a lubricant, a flame retardant, an impact modifier, and a colorant. These additives may be included alone or two or more kinds thereof may be included.
The content of the additive is not particularly limited as long as the effects of the present invention are not impaired, but can be set to 0.02 to 200 parts by mass with respect to 100 parts by mass of the polyamide.
Examples of the method for adding the additive include a method in which the additive is added at the time of polymerization of the polyamide, and a method in which the additive is dry-blended with the polyamide and melt-kneaded.

(Method for Producing Polyamide Composition)

The method for producing the polyamide composition is not particularly limited, and a method capable of uniformly mixing the polyamide and the additive can be preferably employed. For the mixing, in general, a method of melt-kneading using a single screw extruder, a twin screw extruder, a kneader, a Banbury mixer, or the like is preferably employed. The melt-kneading conditions are not particularly limited, and examples thereof include a method of melt-kneading for about 1 to 30 minutes at a temperature in the range of about 10 to 50°C higher than the melting point of the polyamide.

[Molded Body]

In one embodiment, a molded body composed of the above polyamide or the above polyamide composition can be provided.
The molded article of the present embodiment can be used as various molded articles of electric parts, electronic parts, automobile parts, industrial parts, fibers, films, sheets, household goods, and other arbitrary shapes and applications.
Examples of the electric parts and the electronic parts include connectors such as FPC connectors, B to B connectors, card connectors, SMT connectors (e.g., coaxial connectors), and memory card connectors; SMT relays; SMT bobbins; sockets such as memory sockets and CPU sockets; switches such as command switches and SMT switches; optical components such as optical fiber components and optical sensors; LED application components such as LED reflectors; and electronic substrates such as solar cell substrates, LED-mounted substrates, flexible printed wiring boards, and resin-molded circuit boards.
Examples of the automobile parts include cooling parts such as a thermostat housing, a radiator tank, a radiator hose, a water outlet, a water pump housing, and a rear joint; intake and exhaust system parts such as an intercooler tank, an intercooler case, a turbo duct pipe, an EGR cooler case, a resonator, a throttle body, an intake manifold, and a tail pipe; fuel system parts such as a fuel delivery pipe, a gasoline tank, a quick connector, a canister, a pump module, a fuel pipe, an oil strainer, a lock nut, and a seal material; structural components such as a mount bracket, a torque rod, and a cylinder head cover; drive system components such as a bearing retainer, a gear tensioner, a head lamp actuator gear, a slide door roller, and a clutch peripheral component; brake system components such as an air brake tube; in-vehicle electrical components such as a wire harness connector, a motor component, a sensor, an ABS bobbin, a combination switch, and an in-vehicle switch in an engine room; and interior and exterior parts such as a slide door damper, a door mirror stay, a door mirror bracket, an inner mirror stay, a roof rail, an engine mount bracket, an inlet pipe of an air cleaner, a door checker, a plastic chain, an emblem, a clip, a breaker cover, a cup holder, an airbag, a fender, a spoiler, a radiator support, a radiator grille, a louver, an air scoop, a hood bulge, a back door, and a fuel sender module.
Examples of the industrial parts include gas pipes, oilfield pipes, hoses, anti-termite cables (communication cables, pass cables, etc.), coating parts of powder coated products (inner coating of water pipes, etc.), submarine oilfield pipes, pressure hoses, hydraulic tubes, paint tubes, fuel pumps, separators, supercharging ducts, butterfly valves, conveyor roller bearings, railroad tie spring clip supportings, outboard engine covers, generator engine covers, irrigation valves, large switches, and monofilaments (extruded yarns) of fishing nets.
Examples of the fibers include airbag base fabrics, heat-resistant filters, reinforcing fibers, brush bristles, fishing lines, tire cords, artificial turf, carpets, and fibers for seat sheets.

Examples of the films or sheets include heat-resistant pressure-sensitive adhesive tapes such as heat-resistant masking tapes and industrial tapes; magnetic tape materials such as cassette tapes, data storage magnetic tapes for digital data storage, and video tapes; food packaging materials such as pouches for retort foods, individual packages for confectionery, and packages for processed meat products; and electronic component packaging materials such as packages for semiconductor packages.

Among them, since the polyamide of the present embodiment is particularly excellent in crystallization rate, it can be suitably used for electric parts and electronic parts in which it is required to produce a large number of parts in a short time. Specifically, it can be suitably used for electric parts and electronic parts including an SMT process, more specifically, SMT-compatible connectors, SMT relays, SMT bobbins, sockets, command switches, SMT switches, and the like.

Examples

Hereinafter, the present invention will be specifically described with reference to Examples and Comparative Examples, but the present invention is not limited thereto.

Each evaluation in Examples and Comparative Examples was performed in accordance with the following methods.

(Solution viscosity)

The solution viscosity (dL/g) of each of the polyamides obtained in Examples and Comparative Examples, using concentrated sulfuric acid as the solvent at a concentration of 0.2 g/dL and a temperature of 30°C, was determined from the following formula.

$$\eta = [\ln(t_1/t_0)]/c$$

In the above formula, $\eta$ represents the solution viscosity (dL/g), $t_0$ represents the flow-down time (second) of the solvent (concentrated sulfuric acid), $t_1$ represents the flow-down time (second) of the sample solution, and c represents the concentration (g/dL) of the sample in the sample solution (i.e., 0.2 g/dL).

(Melting point, Crystallization temperature, and Glass transition temperature)

The melting point, crystallization temperature, and glass transition temperature of each of the polyamides obtained in Examples and Comparative Examples were measured using a differential scanning calorimetry analyzer "DSC7020" manufactured by Hitachi High-Tech Science Corporation.

The melting point and crystallization temperature were measured in accordance with ISO 11357-3 (2nd edition, 2011). To be specific, in a nitrogen atmosphere, a sample (polyamide) was heated from 30°C to 340°C at a rate of 10°C/min, held at 340°C for 5 minutes to completely melt the sample, then cooled to 50°C at a rate of 10°C/min, held at 50°C for 5 minutes, and then heated again to 340°C at a rate of 10°C/min. The peak temperature of the exothermic peak that appeared when the temperature was lowered was defined as the crystallization temperature, and the peak temperature of the endothermic peak that appeared when the temperature was raised again was defined as the melting point (°C).

The glass transition temperature (°C) was measured in accordance with ISO 11357-2 (2nd edition, 2013). To be specific, in a nitrogen atmosphere, a sample (polyamide) was heated from 30°C to 340°C at a rate of 20°C/min, held at 340°C for 5 minutes to completely melt the sample, then cooled to 50°C at a rate of 20°C/min, and held at 50°C for 5 minutes. The temperature of the inflection point that appeared when the temperature was raised again to 200°C at a rate of 20°C/min was defined as the glass transition temperature (°C).

(Crystallization rate)

The crystallization rate of each of the polyamides obtained in Examples and Comparative Examples was determined by the following formula (Formula 1).

$$\text{Crystallization rate } (°C^{-1}) = 1/(\text{melting point } (°C) - \text{crystallization temperature } (°C)) \quad (\text{Formula 1})$$

In (Formula 1), "melting point (°C)" and "crystallization temperature (°C)" are measured values obtained by the above method. In Table 1, the unit of the crystallization rate is expressed as "1/°C", which has the same meaning as "°C$^{-1}$".

[Example 1]

16.4 g of terephthalic acid, 15.9 g of a mixture [4/1/95 (molar ratio)] of 2-ethyl-1,7-heptanediamine, 2-propyl-1,6-hexanediamine, and 2-methyl-1,8-octanediamine, 0.37 g of benzoic acid, 0.03 g of sodium diphosphite monohydrate (0.1% by mass with respect to the total mass of the raw materials), and 12.7 mL of distilled water were put into an autoclave having an internal volume of 100 mL, and nitrogen replacement was carried out. The mixture was stirred at 150°C for 30 minutes, and then the temperature inside the autoclave was raised to 250°C. Heating was continued for 1 hour while maintaining the temperature at 250°C, and the reaction was allowed to proceed by gradually removing the water vapor. After a predetermined amount of water vapor was distilled off, the reaction was further carried out for 1 hour to obtain a prepolymer. The obtained prepolymer was pulverized to a particle size of 1 mm or less, and dried at 120°C under reduced pressure for 12 hours. This was subjected to solid phase polymerization at 240°C and 90 Pa or less to obtain a polyamide having a melting point of 282°C.

[Example 2]

A polyamide having a melting point of 283°C was obtained in the same manner as in Example 1, except that the diamine unit was a mixture [5.6/0.4/94 (molar ratio)] of 2-ethyl-1,7-heptanediamine, 2-propyl-1,6-hexanediamine, and 2-methyl-1,8-octanediamine.

[Example 3]

A polyamide having a melting point of 262°C was obtained in the same manner as in Example 1, except that the diamine unit was a mixture [12/3/85 (molar ratio)] of 2-ethyl-1,7-heptanediamine, 2-propyl-1,6-hexanediamine, and 2-methyl-1,8-octanediamine.

[Example 4]

A polyamide having a melting point of 258°C was obtained in the same manner as in Example 1, except that the diamine unit was a mixture [16/4/80 (molar ratio)] of 2-ethyl-1,7-heptanediamine, 2-propyl-1,6-hexanediamine, and 2-methyl-1,8-octanediamine.

[Example 5]

A polyamide having a melting point of 288°C was obtained in the same manner as in Example 1, except that the diamine unit was a mixture [4/1/20/75 (molar ratio)] of 2-ethyl-1,7-heptanediamine, 2-propyl-1,6-hexanediamine, 2-methyl-1,8-octanediamine, and 1,9-nonanediamine.

[Example 6]

A polyamide having a melting point of 307°C was obtained in the same manner as in Example 1, except that the diamine unit was a mixture [0.5/14.5/85 (molar ratio)] of 2-ethyl-1,7-heptanediamine, 2-methyl-1,8-octanediamine, and 1,9-nonanediamine.

[Comparative Example 1]

A polyamide having a melting point of 285°C was obtained in the same manner as in Example 1, except that the diamine unit was 2-methyl-1,8-octanediamine.

[Comparative Example 2]

A polyamide having a melting point of 306°C was obtained in the same manner as in Example 1, except that the diamine unit was a mixture [15/85 (molar ratio)] of 2-methyl-1,8-octanediamine and 1,9-nonanediamine.

[Example 7]

A polyamide having a melting point of 283°C was obtained in the same manner as in Example 1, except that the dicarboxylic acid unit was 21.3 g of naphthalenedicarboxylic acid, and the diamine unit was a mixture [4/1/20/75 (molar ratio)] of 2-ethyl-1,7-heptanediamine, 2-propyl-1,6-hexanediamine, 2-methyl-1,8-octanediamine, and 1,9-nonanediamine.

[Comparative Example 3]

A polyamide having a melting point of 294°C was obtained in the same manner as in Example 1, except that the dicarboxylic acid unit was 21.3 g of naphthalenedicarboxylic acid, and the diamine unit was a mixture [15/85 (molar ratio)] of 2-methyl-1,8-octanediamine and 1,9-nonanediamine.

[Example 8]

A polyamide having a melting point of 292°C was obtained in the same manner as in Example 1, except that the dicarboxylic acid unit was 17.0 g of cyclohexanedicarboxylic acid (cis/trans = 79.9/20.1), and the diamine unit was a mixture [4/1/20/75 (molar ratio)] of 2-ethyl-1,7-heptanediamine, 2-propyl-1,6-hexanediamine, 2-methyl-1,8-octanediamine, and 1,9-nonanediamine.

[Comparative Example 4]

A polyamide having a melting point of 301°C was obtained in the same manner as in Example 1, except that the dicarboxylic acid unit was 17.0 g of cyclohexanedicarboxylic acid (cis/trans = 79.9/20.1), and the diamine unit was a mixture [15/85 (molar ratio)] of 2-methyl-1,8-octanediamine and 1,9-nonanediamine.

[Example 9]

A polyamide having a melting point of 289°C was obtained in the same manner as in Example 1, except that the diamine unit was a mixture [4/1/20/75 (molar ratio)] of 2-ethyl-1,7-heptanediamine, 2-propyl-1,6-hexanediamine, 2-methyl-1,8-octanediamine, and 1,10-decanediamine.

[Comparative Example 5]

A polyamide having a melting point of 301°C was obtained in the same manner as in Example 1, except that the diamine unit was a mixture [20/80 (molar ratio)] of 2-methyl-1,8-octanediamine and 1,10-decanediamine.
The compositions of Examples and Comparative Examples and the measurement results thereof are shown in Table 1.

Table 1

| | | | Ex. 1 | Ex. 2 | Ex. 3 | Ex. 4 | Ex. 5 | Ex. 6 | Comp. Ex. 1 | Comp. Ex. 2 | Ex. 7 | Comp. Ex. 3 | Ex. 8 | Comp. Ex. 4 | Ex. 9 | Comp. Ex. 5 |
|---|---|---|---|---|---|---|---|---|---|---|---|---|---|---|---|---|
| Diamine unit | EHDA | mol% | 4 | 5.6 | 12 | 16 | 4 | 0.5 | | | 4 | | 4 | | 4 | |
| | PHDA | mol% | 1 | 0.4 | 3 | 4 | 1 | | | | 1 | | 1 | | 1 | |
| | MODA | mol% | 95 | 94 | 85 | 80 | 20 | 14.5 | 100 | 15 | 20 | 15 | 20 | 15 | 20 | 20 |
| | NMDA | mol% | | | | | 75 | 85 | | 85 | 75 | 85 | 75 | 85 | | |
| | DMDA | mol% | | | | | | | | | | | | | 75 | 80 |
| | (EHDA + PHDA) | mol% | 5 | 6 | 15 | 20 | 5 | 0.5 | 0 | 0 | 5 | 0 | 5 | 0 | 5 | 0 |
| Dicarboxylic acid unit | TA | mol% | 100 | 100 | 100 | 100 | 100 | 100 | 100 | 100 | | | | | 100 | 100 |
| | NDCA | mol% | | | | | | | | | 100 | 100 | | | | |
| | CHDA | mol% | | | | | | | | | | | 100 | 100 | | |
| Physical properties of polyamide | Solution viscosity | dL/g | 1.17 | 1.16 | 1.18 | 1.21 | 1.25 | 1.26 | 1.32 | 1.34 | 1.22 | 1.23 | 1.28 | 1.3 | 1.23 | 1.21 |
| | Melting point | °C | 282 | 283 | 262 | 258 | 288 | 307 | 285 | 306 | 283 | 294 | 292 | 301 | 289 | 301 |
| | Crystallization temperature | °C | 259 | 258 | 242 | 235 | 266 | 280 | 256 | 277 | 246 | 249 | 270 | 276 | 267 | 275 |
| | Glass transition temperature | °C | 124 | 123 | 116 | 112 | 120 | 123 | 125 | 123 | 135 | 136 | 125 | 130 | 121 | 123 |
| | Crystallization rate | 1/°C | 0.044 | 0.040 | 0.050 | 0.043 | 0.046 | 0.037 | 0.034 | 0.035 | 0.027 | 0.022 | 0.045 | 0.040 | 0.045 | 0.039 |

The abbreviations relating to the compounds used in Table 1 above and the contents of the compounds are as shown in Table 2 below. In addition, "(EHDA + PHDA)" in Table 1 represents the total of the blending amounts (mol%) of EHDA and PHDA in the diamine unit.

Table 2

| Abbreviation | Compound |
|---|---|
| EHDA | 2-ethyl-1,7-heptanediamine |
| PHDA | 2-propyl-1,6-hexanediamine |
| MODA | 2-methyl-1,8-octanediamine |
| NMDA | 1,9-nonanediamine |
| DMDA | 1,10-decanediamine |
| TA | terephthalic acid |
| NDCA | 2,6-naphthalenedicarboxylic acid |
| CHDA | 1,4-cyclohexanedicarboxylic acid |

From Table 1, it can be seen that when Examples 1 to 6 and Comparative Examples 1 and 2, Example 7 and Comparative Example 3, Example 8 and Comparative Example 4, and Example 9 and Comparative Example 5 are compared, Examples showed a higher crystallization rate. That is, in a polyamide comprising the same dicarboxylic acid unit, when a 2-ethyl-1,7-heptanediamine unit and a 2-propyl-1,6-hexanediamine unit are included as a diamine unit, a polyamide having a high crystallization rate and excellent productivity is obtained.

In addition, as compared with Comparative Examples 2 to 5 in which only the 2-methyl-1,8-octanediamine unit in which the branched structure was a methyl group was included as the branched aliphatic diamine unit, it is found that in Examples, in which the 2-ethyl-1,7-heptanediamine unit and the 2-propyl-1,6-hexanediamine unit were included, the decrease in the melting point or the glass transition temperature was smaller, and the heat resistance was more excellent.

Therefore, it can be seen from Table 1 that the polyamides of Examples are improved in crystallization rate while maintaining excellent heat resistance, and are excellent in both crystallization rate and heat resistance.

Industrial Applicability

As described above, the polyamide of the present invention can achieve both excellent heat resistance and crystallization rate, which have been difficult to achieve so far. Therefore, the polyamide of the present invention can be used as various molded articles required to have heat resistance, and can improve productivity in production of the molded articles, and is very useful.

**Claims**

1. A polyamide comprising a diamine unit and a dicarboxylic acid unit, wherein said diamine unit comprises 0.1 mol% or more and less than 36 mol% of a diamine unit (X), and the diamine unit (X) is a diamine unit derived from an aliphatic diamine having 6 to 10 carbon atoms, the aliphatic diamine having an alkyl group having 2 or 3 carbon atoms bonded to a carbon atom at the 2-position when a carbon atom to which any one of amino groups is bonded is defined as the 1-position.

2. The polyamide according to claim 1, comprising the diamine unit (X) in an amount of 0.1 to 25 mol% in the diamine unit.

3. The polyamide according to claim 1 or 2, wherein the diamine unit (X) comprises a diamine unit derived from the aliphatic diamine having 9 carbon atoms.

4. The polyamide according to any one of claims 1 to 3, wherein the diamine unit (X) comprises a diamine unit derived from at least one selected from the group consisting of 2-ethyl-1,7-heptane diamine and 2-propyl-1,6-hexane diamine.

5. The polyamide according to any one of claims 1 to 4, comprising the diamine unit (X) in an amount of 1 to 10 mol% in the diamine unit.

6. The polyamide according to any one of claims 1 to 5, wherein the diamine unit other than the diamine unit (X) is a diamine unit derived from at least one selected from the group consisting of a linear aliphatic diamine, a branched aliphatic diamine other than the aliphatic diamine constituting the diamine unit (X), an alicyclic diamine, and an aromatic diamine.

7. The polyamide according to any one of claims 1 to 6, wherein the diamine unit other than the diamine unit (X) is a diamine unit derived from at least one selected from the group consisting of a linear aliphatic diamine and a branched aliphatic diamine in which a branched chain is a methyl group.

8. The polyamide according to any one of claims 1 to 7, wherein the diamine unit other than the diamine unit (X) is a diamine unit derived from a diamine having 6 to 10 carbon atoms.

9. The polyamide according to any one of claims 1 to 8, wherein the diamine unit other than the diamine unit (X) is a diamine unit derived from at least one selected from the group consisting of 1,6-hexanediamine, 1,9-nonanediamine, 1,10-decanediamine, 2-methyl-1,5-pentanediamine, and 2-methyl-1,8-octanediamine.

10. The polyamide according to any one of claims 1 to 9, wherein said dicarboxylic acid unit comprises a dicarboxylic acid unit derived from at least one selected from the group consisting of an aliphatic dicarboxylic acid, an aromatic dicarboxylic acid, and an alicyclic dicarboxylic acid.

11. The polyamide according to any one of claims 1 to 10, wherein said dicarboxylic acid unit comprises a dicarboxylic acid unit derived from at least one selected from the group consisting of terephthalic acid, cyclohexanedicarboxylic acid, and naphthalenedicarboxylic acid.

12. A polyamide composition comprising the polyamide according to any one of claims 1 to 11.

13. A molded body comprising the polyamide according to any one of claims 1 to 11 or the polyamide composition according to claim 12.

## INTERNATIONAL SEARCH REPORT

International application No.

**PCT/JP2021/039200**

### A. CLASSIFICATION OF SUBJECT MATTER

*C08G 69/26*(2006.01)i; *C08L 77/06*(2006.01)i
FI: C08G69/26; C08L77/06

According to International Patent Classification (IPC) or to both national classification and IPC

### B. FIELDS SEARCHED

Minimum documentation searched (classification system followed by classification symbols)

C08G69/00-69/50; C08L77/06

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X | JP 52-041692 A (DYNAMIT NOBEL AKTIENGESELLSCHAFT) 31 March 1977 (1977-03-31) claims 1-2, page 3, upper right column, lines 1-10, page 3, lower left column, lines 5-8, page 3, lower right column, lines 11-17, example 2 | 1-2, 5-13 |
| A | | 3-4 |
| X | JP 03-140327 A (HUELS AKTIENGESELLSCHAFT) 14 June 1991 (1991-06-14) claim 1, page 3, lower left column, lines 13-20, page 3, lower right column, line 13 to page 4, upper left column, line 17, example 1 | 1-2, 5-8, 10-13 |
| A | | 3-4, 9 |
| X | WO 93/00386 A1 (E. I. DU PONT DE NEMOURS AND COMPANY) 07 January 1993 (1993-01-07) claims 1, 4, page 5, lines 4-11, page 6, lines 1-36, table I(a), example 1 | 1-2, 5-10, 12-13 |
| A | | 3-4,11 |
| A | JP 2020-029540 A (KURARAY COMPANY LIMITED) 27 February 2020 (2020-02-27) entire text | 1-13 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **20 December 2021** | **28 December 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2021/039200**

### C.    DOCUMENTS CONSIDERED TO BE RELEVANT

| Category* | Citation of document, with indication, where appropriate, of the relevant passages | Relevant to claim No. |
|---|---|---|
| A | WO 2017/006748 A1 (TOYOTA BOSHOKU CORPORATION) 12 January 2017 (2017-01-12)<br>entire text | 1-13 |

**INTERNATIONAL SEARCH REPORT**
**Information on patent family members**

| | | International application No. |
|---|---|---|
| | | **PCT/JP2021/039200** |

| Patent document cited in search report | Publication date (day/month/year) | Patent family member(s) | Publication date (day/month/year) |
|---|---|---|---|
| JP 52-041692 A | 31 March 1977 | US 4111921 A<br>claims 1, 4, page 2, column 3, lines 58-68, page 2, column 4, lines 21-24, page 2, column 4, lines 55-63, example 2<br>GB 1557272 A<br>DE 2542938 A1<br>FR 2325673 A1<br>BE 846558 A<br>CA 1063293 A<br>IT 1066261 B | |
| JP 03-140327 A | 14 June 1991 | US 5300557 A<br>claim 1, page 1, column 2, line 62 to page 2, column 3, line 7, page 2, column 3, lines 41-66, example 1<br>EP 423472 A2<br>DE 3934926 A1<br>CA 2027965 A1 | |
| WO 93/00386 A1 | 07 January 1993 | US 5110900 A<br>EP 593577 B1<br>BR 9206173 A<br>CA 2111247 A1 | |
| JP 2020-029540 A | 27 February 2020 | (Family: none) | |
| WO 2017/006748 A1 | 12 January 2017 | US 2018/0127544 A1<br>entire text | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011080055 A
- JP 2017517594 A

- JP H07228690 A